# EUROPEAN PATENT APPLICATION

(11) **EP 2 565 246 A2**
(43) Date of publication of application: **06.03.2013**
(21) Application number: 12182548.3
(22) Date of filing: 31.08.2012
(51) Int. Cl.: C09J 7/02

(54) **Double-sided adhesive tape**

(30) Priority: 31.08.2011 JP 2011189643; 31.08.2011 JP 2011189644; 31.08.2011 JP 2011189645
(71) Applicant: Brother Kogyo Kabushiki Kaisha, Nagoya-shi, Aichi 467-8561 (JP)
(72) Inventor: Norimatsu, Takahiro, Nagoya-shi, Aichi 467-8562 (JP)
(74) Representative: Prüfer & Partner GbR European Patent Attorneys

(57) **Abstract**

A double-sided adhesive tape (1) rolled on a roll core includes a PET (polyethylene terephthalate film) film (2) with a first adhesive layer (3) and a second adhesive layer (5) respectively applied on the first surface and the second surface thereof, and a release sheet (4) laminated on the first surface of the PET film (2). The double-sided adhesive tape (1) is defined by an unusable portion accounting for one portion from the roll core to reach predetermined length of distance and a usable portion accounting for other portion to exceed the predetermined length of distance from the roll core on the double-sided adhesive tape (1). 100 N/m or larger of tensile force is applied to the PET film (2) when the release sheet (4) is laminated onto the first adhesive layer (3) applied on the first surface of the PET film (2), which is to prevent the PET film (2) from bearing a wrinkle in the usable portion.

## Description

### BACKGROUND OF THE INVENTION

### 1. Field of the Invention

The present invention relates to a double-sided adhesive tape that is rolled on a roll core, formed of polyethylene terephthalate (PET) film as substrate thereof, and defined by an unusable portion and a usable portion wherein the unusable portion accounts for one range to reach predetermined length of distance from the roll core and the usable portion accounts for other range to exceed the predetermined length of distance over the unusable portion that begins from the roll core. The present invention especially relates to the double-sided adhesive tape capable of preventing the PET film from bearing a wrinkle at the usable portion.

### 2. Description of Related Art

There have conventionally been proposed various double-sided adhesive tapes configured to include a substrate, two of adhesive layers disposed on a top surface and a bottom surface of the substrate and a release sheet disposed on either one of the two of adhesive layers.

For instance, JP Laid-open Patent Application Publication No. 5-140520 discloses a double-sided adhesive tape obtained by adhering an adhesive layer of a release sheet onto one surface of a substrate with a transfer roll and further transferring an adhesive layer of a process sheet onto other surface of the substrate with another transfer roll. The double-sided adhesive tape as mentioned above employs a substrate made of nonwoven fabric of which primary ingredient is hemp. When the adhesive layer adhered to the release sheet is laminated on the substrate, the substrate is pulled in longitudinal directions so as to expand its length by 0.20 to 0.50 % longer. The double-sided adhesive tape thus fabricated is capable of avoiding occurrence of a wrinkle in its inner adhesive layer or curling itself.

As to a typical double-sided adhesive tape rolled on a roll core, a substrate and a release sheet are bonded together by intervention of an adhesive layer. Above such configuration naturally creates circumferential difference between circumferential length of a substrate and that of a release sheet because the release sheet is made to turn exterior to the substrate when the double-sided adhesive tape is rolled on the core. Consequently, the circumferential length of the substrate made to turn interior to the release sheet has extra length and wrinkles occur in the substrate.

In a case where a double-sided adhesive tape is rolled on a core, a substrate made to turn interior to a release sheet cannot help bearing a wrinkle. Accordingly, the double-sided adhesive tape of JP Laid-open Patent Application Publication No. 5-140520 can possibly bear a wrinkle at its substrate side while being kept in storage. It is significantly difficult to thoroughly avoid occurrence of a wrinkle in the substrate side.

### SUMMARY OF THE INVENTION

The present invention has been made to solve the above-described problem. Also, the object of the present invention is to provide a double-sided adhesive tape capable of preventing the PET film from bearing a wrinkle.

According to a first aspect of the present invention, there is provided a double-sided adhesive tape (1) rolled on a cylindrical roll core, the double-sided adhesive tape (1) comprising: a polyethylene terephthalate film (2) having a first surface and a second surface opposite to the first surface; a first adhesive layer (3) applied on the first surface of the polyethylene terephthalate film (2); a release sheet (4) laminated on the first surface of the polyethylene terephthalate film (2) through the first adhesive layer (3), the release sheet (4) being laminated so as to turn exterior to the polyethylene terephthalate film (2); a second adhesive layer (5) applied on the second surface of the polyethylene terephthalate film (2), wherein 100 N/m or larger of tensile force is applied to the polyethylene terephthalate film (2) when the release sheet (4) is laminated onto the first adhesive layer (3) applied on the first surface of the polyethylene terephthalate film (2).

In the double-sided adhesive tape (1) directed to the first aspect of the present invention, since 100 N/m or larger of tensile force is applied to the polyethylene terephthalate film (2) when the release sheet (4) is laminated onto the first adhesive layer (3) applied on the first surface of the polyethylene terephthalate film (2), the polyethylene terephthalate film (2) can be prevented from bearing a wrinkle therein.

Since tensile force to be applied to the polyethylene terephthalate film (2) is 100 N/m or larger, there arises little difference between circumferential length of the polyethylene terephthalate film (2) and that of the release sheet (4) presenting exterior to the polyethylene terephthalate film (2) and this can avoid the polyethylene terephthalate film (2) from bearing a wrinkle. Even though the above described double-sided adhesive tape (1) is kept in storage for long time, springback and a wrinkle does not occur to the polyethylene terephthalate film (2).

Incidentally, in a case where tensile force to be applied to the polyethylene terephthalate film (2) is smaller than 100 N/m, the degree for the polyethylene terephthalate film (2) to be expanded is not sufficient and there reminds difference between circumferential length of the polyethylene terephthalate film (2) and that of the release sheet (4) presenting exterior to the polyethylene terephthalate film (2). Consequently, a wrinkle can possibly occur to the polyethylene terephthalate film (2).

It is favorable that tensile force applied to the polyethylene terephthalate film (2) is 200 N/m or smaller.

In the above double-sided adhesive tape (1), degree for the polyethylene terephthalate film (2) to be expanded is maintained in satisfactory range and there arises little difference between the circumferential length of the polyethylene terephthalate film (2) and the circumferential length of the release sheet (4) presenting exterior to the polyethylene terephthalate film (2). Therefore, the polyethylene terephthalate film (2) can be prevented from bearing a wrinkle.

In a case where tensile force applied to the polyethylene terephthalate film (2) exceeds 200 N/m, tensile force becomes too large. Due to this, the polyethylene terephthalate film (2) is unnecessarily expanded and the width of the polyethylene terephthalate film (2) becomes narrow. In addition, since the polyethylene terephthalate film (2) is unnecessarily expanded, springback of the polyethylene terephthalate film (2) occurs, as a result, the release sheet (4) gets loose and there is fear that the release sheet (4) and the first adhesive layer (3) mutually come off during feeding thereof after stored for long time.

In the double-sided adhesive tape, it is conceivable that a tape piece ((A ∼ F) obtained by unrolling and peeling off the double-sided adhesive tape (1) from the roll core and cutting off by 20 cm length is adjusted to have 110mm or smaller curling diameter measured after the tape piece (A ∼ F) has been kept for 24 hours under 50% humidity at 23 degrees Celsius.

Thus configured double-sided adhesive tape (1) can prevent the polyethylene terephthalate film (2) from bearing a wrinkle.

In the above double-sided adhesive tape (1), in a case where curling diameter of the tape piece (A ∼ F) is adjusted to be 50mm or larger, curvature of the double-sided adhesive tape (1) is maintained in a favorable condition and there arises little difference between the circumferential length of the polyethylene terephthalate film (2) and the circumferential length of the release sheet (4) presenting exterior to the polyethylene terephthalate film (2).

On the other hand, in a case where curling diameter of tape piece (A ∼ F) becomes 50 mm or smaller, curvature of the double-sided adhesive tape (1) becomes too large and the polyethylene terephthalate film (2) is unnecessarily expanded. Therefore, the release sheet (4) comes loose and the release sheet (4) and the first adhesive layer (3) mutually come off during feeding thereof.

In the double sided-adhesive tape (1), it is conceivable that in a case where a 10g of weight is hung for predetermined time on a first end of each of a 5m-long polyethylene terephthalate film (2) and a 5m-long release sheet (4) while a second end of each being fixed, and length change of each is measured after passage of the predetermined time, length change difference between the 5m-long polyethylene terephthalate film (2) and the 5m-long release sheet (4) is adjust to be 0.21mm or larger, the 5m-long polyethylene terephthalate film (2) and the 5m-long release sheet (4) being obtained by unrolling the double-sided adhesive tape (1) from the roll core, cutting off by 5m and separating the polyethylene terephthalate film (2) and the release sheet (4).

In the above double sided adhesive tape (1), tensile force is applied to the polyethylene terephthalate film (2) when the release sheet (4) is laminated onto the first adhesive layer (3) applied on the first surface of the polyethylene terephthalate film (2) and in a case where a 10g of weight is hung on the first end for predetermined time with respect to each of a 5m-long polyethylene terephthalate film (2) and a 5m-long release sheet (4) while the second end of each being fixed, and length change of each is measured after passage of the predetermined time, length change difference between the 5m-long polyethylene terephthalate film (2) and the 5m-long release sheet (4) is adjust to be 0.21mm or larger, the 5m-long polyethylene terephthalate film (2) and the 5m-long release sheet (4) being obtained by unrolling the double-sided adhesive tape (1) from the roll core, cutting off by 5m and separating the polyethylene terephthalate film (2) and the release sheet (4). Thus configured double-sided adhesive tape (1) can prevent the polyethylene terephthalate film from bearing a wrinkle.

In the above double-sided adhesive tape (1), it is conceivable that the length change difference between the 5m-long polyethylene terephthalate film (2) and the 5m-long release sheet (4) is made 0.35 mm or smaller.

In the thus configured double-sided adhesive tape (1), since length change difference between the 5m-long polyethylene terephthalate film (2) and the 5m-long release sheet (4) is adjust to be 0.35 mm or smaller, there arises little difference between the circumferential length of the polyethylene terephthalate film (2) and the circumferential length of the release sheet (4) presenting exterior to the polyethylene terephthalate film (2). Therefore, thus configured double-sided adhesive tape (1) can prevent the polyethylene terephthalate film from bearing a wrinkle.

On the other hand, in a case where length change difference between the 5m-long polyethylene terephthalate film (2) and the 5m-long release sheet (4) becomes larger than 0.35 mm, the polyethylene terephthalate film (2) is unnecessarily expanded. Therefore, the release sheet (4) comes loose and the release sheet (4) and the first adhesive layer (3) mutually come off during feeding thereof.

In the double-sided adhesive tape (1), it is conceivable that the double-sided adhesive tape (1) is defined by an unusable portion accounting for one portion from the roll core to reach predetermined length of distance on the double-sided adhesive tape (1) and a usable portion accounting for other portion to exceed the predetermined length of distance from the roll core on the double-sided adhesive tape (1), and the polyethylene terephthalate film (2) is prevented from bearing a wrinkle in the usable portion.

In the above double-sided adhesive tape (1), the double-sided adhesive tape (1) is defined by an unusable portion accounting for one range to reach predetermined length of distance from the roll core and a usable portion accounting for other range to exceed the predetermined length of distance over the unusable portion that begins from the roll core. Since tensile force is applied to the polyethylene terephthalate film (2) when the release sheet (4) is laminated onto the first adhesive layer (3) applied on the first surface of the polyethylene terephthalate film (2), this can prevent the polyethylene terephthalate film (2) from bearing a wrinkle in the usable portion that exceeds the predetermined length of distance from the roll core on the double-sided adhesive tape (1).

According to a second aspect of the present invention, there is provided a tape cassette (CS) comprising: a tape spool (31) around which a transparent printing tape (30) is wound; an ink ribbon (32) in which ink meltable by heating is coated on a base film; a winding spool (33) for winding the ink ribbon (32); and a double-sided adhesive tape (1) having a same width of the printing tape (30); wherein the double-sided adhesive tape (1) comprises: a polyethylene terephthalate film (2) having a first surface and a second surface opposite to the first surface; a first adhesive layer (3) applied on the first surface of the polyethylene terephthalate film (2); a release sheet (4) laminated on the first surface of the polyethylene terephthalate film (2) through the first adhesive layer (3), the release sheet (4) being laminated so as to turn exterior to the polyethylene terephthalate film (2); and a second adhesive layer (5) applied on the second surface of the polyethylene terephthalate film (2), wherein 100 N/m or larger of tensile force is applied to the polyethylene terephthalate film (2) when the release sheet (4) is laminated onto the first adhesive layer (3) applied on the first surface of the polyethylene terephthalate film (2).

In the above tape cassette, since 100 N/m or larger of tensile force is applied to the polyethylene terephthalate film (2) when the release sheet (4) is laminated onto the first adhesive layer (3) applied on the first surface of the polyethylene terephthalate film (2), the polyethylene terephthalate film (2) can be prevented from bearing a wrinkle therein.

Since tensile force to be applied to the polyethylene terephthalate film (2) is 100 N/m or larger, there arises little difference between circumferential length of the polyethylene terephthalate film (2) and that of the release sheet (4) presenting exterior to the polyethylene terephthalate film (2) and this can avoid the polyethylene terephthalate film (2) from bearing a wrinkle. Even though the above described double-sided adhesive tape (1) is kept in storage for long time, springback and a wrinkle does not occur to the polyethylene terephthalate film (2).

According to a third aspect of the present invention, there is provided a producing method of a double-sided adhesive tape (1) comprising: a polyethylene terephthalate film (2) having a first surface and a second surface opposite to the first surface; a first adhesive layer (3) applied on the first surface of the polyethylene terephthalate film (2); a release sheet (4) laminated on the first surface of the polyethylene terephthalate film (2) through the first adhesive layer (3), the release sheet (4) being laminated so as to turn exterior to the polyethylene terephthalate film (2), and a second adhesive layer (5) applied on the second surface of the polyethylene terephthalate film (2); the producing method comprising: applying step for applying 100 N/m or larger of tensile force to the polyethylene terephthalate film (2) before the release sheet (4) is laminated; and laminating step for laminating the release sheet (4) onto the first adhesive layer (3) applied on the first surface of the polyethylene terephthalate film (2).

In the above producing method of the double-sided adhesive tape (1), since 100 N/m or larger of tensile force is applied to the polyethylene terephthalate film (2) when the release sheet (4) is laminated onto the first adhesive layer (3) applied on the first surface of the polyethylene terephthalate film (2), the polyethylene terephthalate film (2) can be prevented from bearing a wrinkle therein.

Since tensile force to be applied to the polyethylene terephthalate film (2) is 100 N/m or larger, there arises little difference between circumferential length of the polyethylene terephthalate film (2) and that of the release sheet (4) presenting exterior to the polyethylene terephthalate film (2) and this can avoid the polyethylene terephthalate film (2) from bearing a wrinkle. Even though the above described double-sided adhesive tape (1) is kept in storage for long time, springback and a wrinkle does not occur to the polyethylene terephthalate film (2).

Further developments of the present invention are given in the dependent claims.

### BRIEF DESCRIPTION OF THE DRAWINGS

FIG. 1 is a schematic cross-sectional view of a double-sided adhesive tape directed to the present embodiment;
FIG. 2 is a schematic view for illustrating a double-sided adhesive tape maker;
FIG. 3 is a graph for illustrating relation between tensile force applied on a PET (polyethylene terephthalate) film and tape length from a roll core to a wrinkle in the tape;
FIG. 4 is a view for schematically illustrating curling states of tape pieces after being kept under predetermined condition, each of the tape pieces being obtained by cutting off a double-sided adhesive tape by predetermined length;
FIG. 5 is a graph for illustrating relation between: curling state of tape pieces obtained by cutting off the respective double-sided adhesive tapes by the predetermined length and being kept under the predetermined condition; and tape length from a roll core to a wrinkle in the tape;
FIG. 6 is a graph for schematically illustrating relation between: length difference of a PET film and a release sheet making up a predetermined length of a double-sided adhesive tape, the length difference being measured under predetermined condition; and tape length from a roll core to a wrinkle in the tape; and
FIG. 7 is a plan view of a tape cassette that employs the double-sided adhesive tape directed to the present embodiment.

### DETAILED DESCRIPTION OF THE PREFERRED EMBODIMENTS

Next, there will be described on an embodiment of a double-sided adhesive tape directed to the disclosure by referring to drawings.

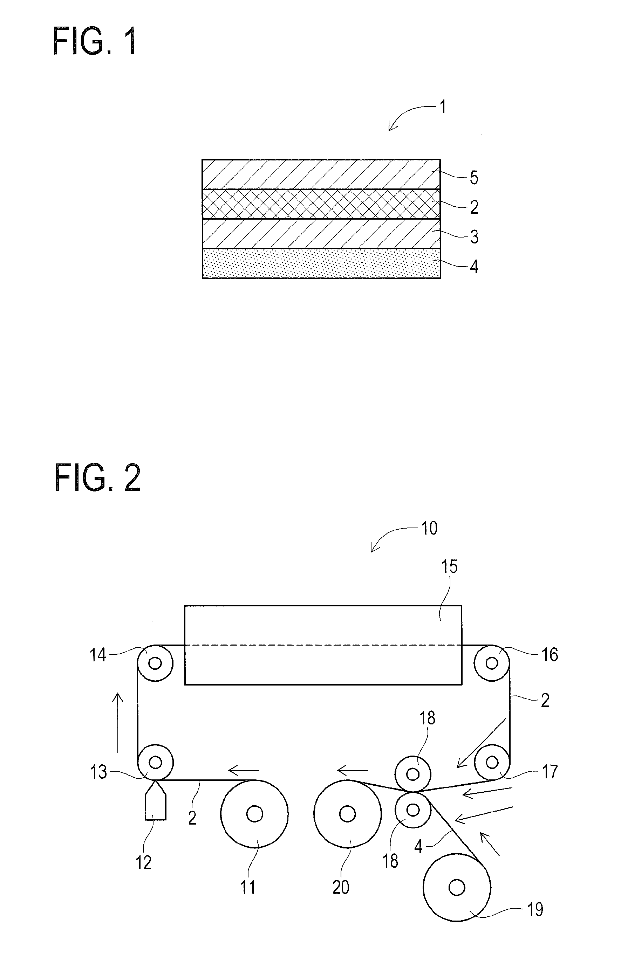

Firstly, configuration of the double-sided adhesive tape of the present embodiment will be described by referring to Fig. 1. A double-sided adhesive tape 1 of the present embodiment is essentially comprised of: a PET (polyethylene terephthalate) film 2 as substrate film; a first adhesive layer 3 that is applied onto one surface of the PET film 2 (lower surface in Fig. 1); a release sheet 4 pasted onto the first adhesive layer 3; and a second adhesive layer 5 that is applied onto the other surface of the PET film 2 (upper surface in Fig. 1).

The PET film 2 is a 12µm-thick transparent film. Ingredients in common with the first adhesive layer 3 and the second adhesive layer 5 are mixture of solvent-type acrylic pressure sensitive adhesive agent (50% of solids contents, 5000cps of viscosity) and ethyl acetate as diluent. The thus obtained mixture is applied onto the upper surface and the lower surface of the PET film 2 so as to form the first adhesive layer 3 and the second adhesive layer 5. In this connection, 1.0 part by weight of solvent-type acrylic pressure sensitive adhesive and 20 parts by weight of ethyl acetate are mixed into 100 parts by weight of adhesive agent.

The release sheet 4 is made from glassine paper with 55 *µ* m thickness, on both planes of which silicone processing is done.

Next, there will be described on manufacturing method of the double-sided adhesive tape 1 directed to the present embodiment. The double-sided adhesive tape 1 is manufactured by a double-sided adhesive tape maker 10. In Fig. 2, the double-sided adhesive tape maker 10 includes a film feeding roll 11 onto which the PET film 2 is rolled and the PET film 2 is fed from the film feeding roll 11.

At the downstream of the film feeding roll 11, there are arranged: a coater head 12 for coating with adhesive agent the one surface (lower surface in Fig. 2) of the PET film 2 that is fed from the film feeding roll 11; and a conveying roller 13 that faces the coater head 12. It is to be noted that the coater head 12 is comprised of a so-called die coater and by adjusting gap of the die coater, adhesive agent is applied and dried so as to obtain a 20µm-thick first adhesive layer 3 after dried.

At the downstream of the coater head 12 and the conveying roller 13, there is arranged a conveying roller 14 for changing conveying direction of the PET film 2. At the downstream of the conveying roller 14, there is arranged a drying oven 15 of which maximum inner temperature is set to 100 degrees Celsius. Direction for the PET film 2 to be conveyed is changed by the conveying roller 14 so as to bring the PET film 2 into the drying oven 15. The adhesive agent applied onto the one surface of the PET film 2 is dried during the PET film 2 passing the drying oven 15 and formed into a 20µm-thick first adhesive layer 3.

At the downstream of the drying oven 15, there are arranged a conveying roller 16, a conveying roller 17 and a pair of laminating rollers 18, 18. The PET film 2 dried by the drying oven 15 is conveyed by the conveying rollers 16 and 17. Direction for the dried PET film 2 to be conveyed is changed by the conveying rollers 16 and 17 so as to feed the PET film 2 to the pair of laminating rollers 18, 18. It is to be noted that speed for the pair of laminating rollers 18, 18 to convey the PET film 2 is set faster than speed for the conveying roller 17 to convey the PET film 2 in order to apply tensile force to the PET film 2. The rotation speed of the pair of laminating rollers 18, 18 and that of the conveying roller 17 are adjusted variously so that tensile force on the PET film 2 can be changed at various levels. Application of tensile force to the PET film 2 at various levels can be implemented by taking various methods.

Further, a release sheet feeding roll 19 with a release sheet 4 being rolled thereon is arranged in the vicinity of the pair of laminating rollers 18, 18 so that the release sheet 4 is fed from the release sheet feeding roll 19 to the path between the pair of laminating rollers 18, 18.

As mentioned in the above, the PET film 2 is fed to the pair of laminating roller 18, 18 while tensile force is applied thereto. Concurrently with the above feed of the PET film 2, the release sheet 4 is fed from the release sheet feeding roll 19 to the pair of laminating roller 18, 18 so that the first adhesive layer 3 of the PET film 2 and the release sheet 4 are laminated together through the path between the pair of laminating rollers 18, 18.

Thus, the release-sheet-attached tape obtained by laminating the release sheet 4 on one surface of the PET film 2 with intervention of the first adhesive layer 3 is taken up into a take-up roll 20 arranged at the downstream of the pair of laminating rollers 18, 18.

The above mentioned series of process completes the release-sheet-attached tape obtained by laminating the release sheet 4 on one surface of the PET film 2 with intervention of the first adhesive layer 3. Thereafter, a second adhesive layer 5 is applied onto the other surface of the PET film 2, the other surface being the reverse of the one surface of the PET film 2 to which the first adhesive layer 3 is applied.

Application and formation of the second adhesive layer 5 is realized by using the double-sided adhesive tape maker 10. For instance, instead of the film feeding roll 11, the take-up roll 20 with the release-sheet-attached tape being rolled thereon shall be set at the location of the film feeding roll 11 so that the other surface, the reverse of the surface coated with the first adhesive layer 3, should face the coater head 12. The other surface, the reverse of the surface coated with the first adhesive layer 3, is coated with adhesive agent by using the coater head 12 so as to obtain 20µm thickness after dried. Thereafter, the PET film 2 is fed to the drying oven 15 by the conveying rollers 13 and 14 so as to dry the adhesive agent and obtain the second adhesive layer 5. Thereafter, the resultant tape is taken up onto a take-up roll by the aid of the conveying rollers 16, 17 and the pair of laminating rollers 18, 18. Thus, there can be manufactured the double-sided adhesive tape 1 formed of: the PET film 2; the first adhesive layer 3 that is applied onto one surface of the PET film 2; the release sheet 4 that is laminated on the first adhesive layer 3; and the second adhesive layer 5 that is applied onto the other surface of the PET film 2.

The double-sided adhesive tape 1 as described above is generally manufactured on the scale of 1000mm tape width and 1000m roll length as original scale tape of the double-sided adhesive tape. The one manufactured as original scale tape undergoes aging treatment for 48 hours at temperature of 40 degrees Celsius.

The original scale tape is cut into medium-sized double-sided adhesive tapes to obtain medium rolls each having 36mm-6mm tape width and approximately 1000m of roll length in rolled onto a core.

Further, a medium roll of the double-sided adhesive tape is cut into small rolls each having 36mm-6mm tape width (the same as width of the medium roll) and 9m of roll length rolled onto a core of which major diameter is 12mm.

The thus obtained small roll of double-sided adhesive tape is used as tape to be accommodated in a tape cassette for a tape printing apparatus to be described later.

For forming a small roll by rolling the double-sided adhesive tape 1 onto periphery of a roll core, the double-sided adhesive tape 1 is rolled so as to make the second adhesive layer 5 and the release sheet 4 turn inward and outward, respectively, with reference to the roll core. When the double-sided adhesive tape 1 is rolled, there arises length difference between circumferential length of the PET film 2 and that of the release sheet 4. The circumferential length difference between them is likely to cause the PET film 2 to bear a wrinkle. Once a wrinkle occurs, adhesive property of the double-sided adhesive tape 1 deteriorates at the wrinkled portion and neatness is spoiled in a case where the double-sided adhesive tape 1 is used visibly and recognizably.

As described previously, there has been taken conventional countermeasure against occurrence of a wrinkle, in such a manner that tensile force is applied to the PET film 2 at the moment of laminating the first adhesive layer 3 and the release sheet 4 on the PET film 2 for fabricating the original scale tape. The original scale tape fabricated in the above manner is scaled down to a medium roll and further down to a small roll of the double-sided adhesive tape 1 and it has actually been recognized that the thus finally fabricated small roll of the double-sided adhesive tape 1 can avoid occurrence of a wrinkle to some extent owing to the tensile force previously applied to the PET film 2 that absorbs difference between circumferential length of the PET film 2 and that of the release sheet 4.

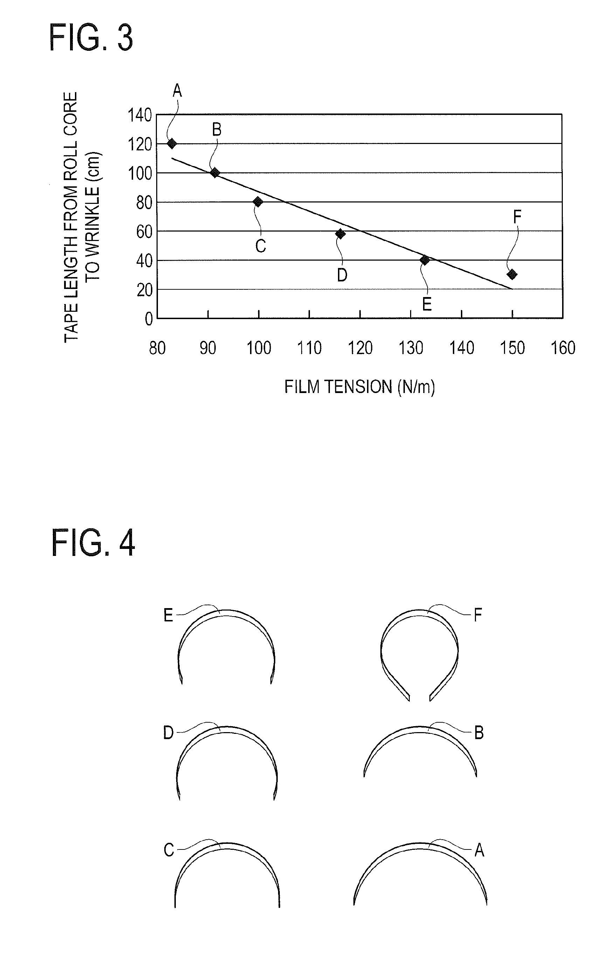

Here, for experiments, there have been prepared six kinds of original scale tapes fabricated by varying tensile force to be applied on the PET film 2 at the moment of laminating the first adhesive layer 3 and the release sheet 4 thereon. From the six kinds of original scale tapes, six kinds of small rolls A through F have been fabricated and those six kinds of small rolls A through F have been used for the experiments to find relation between tensile force applied to a PET film 2 at the moment of fabricating the original scale tape and a wrinkle-occur portion with respect to each of the small rolls A through F. A graph in Fig. 3 shows experiment results.

Of the graph in Fig. 3, the abscissa indicates per tape width of tensile force (N/m) applied to the PET film 2 at the moment of laminating the release sheet 4 on the PET film 2 to fabricate the original scale tape and the ordinate indicates tape length (cm) from a roll core to a portion that bears a wrinkle at outermost periphery of respective small rolls of double-sided adhesive tape 1.

With respect to a double-sided adhesive tape 1 rolled onto a small roll, a range to reach 100cm from a roll core of the tape is defined as an unusable portion and another range to exceed 100cm over the unusable portion that begins from the roll core is defined as a usable portion to be practically used as double-sided adhesive tape.

The point A shown in Fig. 3 accounts for an experiment result with respect to a small roll A and the experiment result has been obtained by taking the following steps: fabricating an original scale tape by applying 83.1 N/m of tensile force onto a PET film 2; as samples for the experiment, making twenty of small rolls A from the thus fabricated original scale tape; and calculating an average value of length from a roll core to a wrinkle in the tape with respect to the twenty of small rolls A. Similarly, the point B accounts for an experiment result with respect to a small roll B and the experiment result has been obtained by taking the following steps: fabricating an original scale tape by applying 91.4 N/m of tensile force onto a PET film 2; as samples for the experiment, making twenty of small rolls B from the thus fabricated original scale tape; and calculating an average value of length from a roll core to a wrinkle in the tape with respect to each of the twenty of small rolls B. Similarly, the point C accounts for an experiment result with respect to a small roll C and the experiment result has been obtained by taking the following steps: fabricating an original scale tape by applying 99.7 N/m of tensile force onto a PET film 2; as samples for the experiment, making twenty of small rolls C from the thus fabricated original scale tape; and calculating an average value of length from a roll core to a wrinkle in the tape with respect to the twenty of small rolls C. Similarly, the point D accounts for an experiment result with respect to a small roll D and the experiment result has been obtained by taking the following steps: fabricating an original scale tape by applying 116.3 N/m of tensile force onto a PET film 2; as samples for the experiment, making twenty of small rolls D from the thus fabricated original scale tape; and calculating an average value of length from a roll core to a wrinkle in the tape with respect to the twenty of small rolls D. Similarly, the point E accounts for an experiment result with respect to a small roll E and the experiment result has been obtained by taking the following steps: fabricating an original scale tape by applying 132.9 N/m of tensile force onto a PET film 2; as samples for the experiment, making twenty of small rolls E from the thus fabricated original scale tape; and calculating an average value of length from a roll core to a wrinkle in the tape with respect to the twenty of small rolls E. Similarly, the point F accounts for an experiment result with respect to a small roll F and the experiment result has been obtained by taking the following steps: fabricating an original scale tape by applying 149.5 N/m of tensile force onto a PET film 2; as samples for the experiment, making twenty of small rolls F from the thus fabricated original scale tape; and calculating an average value of length from a roll core to a wrinkle in the tape with respect to the twenty of small rolls F.

In Fig. 3, the point A directed to the small roll A indicates that a wrinkle occurs at a location 118.4cm away from the roll core in the case of small tensile force of 83.1 N/m to the PET film 2. In this case, a wrinkle occurs in the usable portion of the double-sided adhesive tape 1. Therefore, the above indicated deficiency occurs if a small roll is made from the original scale tape fabricated in the above described manner.

The point B directed to the small roll B indicates that a wrinkle occurs at a location 101.3cm away from the roll core in the case of tensile force of 91.4 N/m onto the PET film 2. In this case, a winkle is supposed to occur at the boarder of the unusable portion and the usable portion of the double-sided adhesive tape 1. Even if a small roll is made from the thus fabricated original scale tape and the small roll with such property is used as double-sided adhesive tape 1, serious deficiency can hardly occur. However, it is not positively recommended to use the double-sided adhesive tape 1 with such deficiency.

The point C directed to the small roll C indicates that a wrinkle occurs at a location 79.9cm away from the roll core in the case of tensile force of 99.7 N/m to the PET film 2. In this case, a winkle is supposed to occur at the unusable portion only. Therefore, any deficiencies will not occur if the small roll made from the thus fabricated original scale tape is used as double-sided adhesive tape 1.

The point D directed to the small roll D indicates that a wrinkle occurs at a location 57.4cm away from the roll core in the case of tensile force of 116.3 N/m to the PET film 2. In this case, a winkle is supposed to occur at the unusable portion only. Therefore, any deficiencies will not occur if the small roll made from the thus fabricated original scale tape is used as double-sided adhesive tape 1.

The point E directed to the small roll E indicates that a wrinkle occurs at a location 39.4cm away from the roll core in the case of tensile force of 132.9 N/m to the PET film 2. In this case, a winkle is supposed to occur at the unusable portion only. Therefore, any deficiencies will not occur if the small roll made from the thus fabricated original scale tape is used as double-sided adhesive tape 1.

The point F directed to the small roll F indicates that a wrinkle occurs at a location 29.4cm away from the roll core in the case of tensile force of 149.5 N/m to the PET film 2. In this case, a winkle is supposed to occur at the unusable portion only. Therefore, any deficiencies will not occur if the small roll made from the thus fabricated original scale tape is used as double-sided adhesive tape 1.

To sum up, as long as tensile force of 99.7 N/m or larger, for instance, 100 N/m or larger, is applied on the PET film 2 at the time of laminating the release sheet 2 thereon, occurrence of a winkle can reliably be avoided in a usable portion of a small roll made from original scale tape that holds the above mentioned tensile force, the usable portion being away from the roll core of the small roll by 100cm or longer.

In a case where tensile force to be applied to the PET film 2 is 200 N/m or smaller, the extent of the PET film 2 expanding is held within favorable range. Consequently, there arises little difference between circumferential length of the PET film 2 and that of the release sheet 4 presenting exterior to the PET film 2 and this can avoid the PET film 2 from bearing a wrinkle at a usable portion of the double-sided adhesive tape 1. On the other hand, in a case where tensile force to be applied on the PET film 2 exceeds 200 N/m, the PET film 2 is too much expanded. Consequently, at the time of using the double-sided adhesive tape 1 that has been kept in storage for long time, springback occurs to the PET film 2, which eventually causes slack of the release sheet 4 and separation of the release sheet 4 from the first adhesive layer 3 while the double-sided adhesive tape1 is being conveyed.

Next, there will be described on curling state of respective double-sided adhesive tapes kept in storage under the following condition, the respective double-sided adhesive tapes being unrolled and peeled off from the thus fabricated small rolls A through F.

Firstly, there will be described on measuring condition of curling state. Double-sided adhesive tapes of respective small rolls A through F have been unrolled and peeled off from their respective roll cores and cut off by predetermined length (for instance, 20cm) so as to obtain tape pieces A through F. Next, each of the tape pieces A through F has been kept under 50% humidity atmosphere for 24 hours at 23 degrees Celsius. Fig. 4 shows curling state of each tape piece obtained under the above condition.

In Fig. 4, the tape piece A has been obtained from the small roll A fabricated by applying 83.1 N/m of tensile force to the PET film 2. Due to application of small tensile force, the curling state of the tape piece A is wide and curling diameter thereof is large.

The tape piece B has been obtained from the small roll B fabricated by applying 91.4 N/m of tensile force to the PET film 2. The curling diameter of the tape piece B is smaller than that of the tape piece A.

The tape piece C has been obtained from the small roll C fabricated by applying 99.7 N/m of tensile force to the PET film 2. The curling diameter of the tape piece C is smaller than that of the tape piece B.

The tape piece D has been obtained from the small roll D fabricated by applying 116.3 N/m of tensile force to the PET film 2. The curling diameter of the tape piece D is smaller than that of the tape piece C.

The tape piece E has been obtained from the small roll E fabricated by applying 132.9 N/m of tensile force to the PET film 2. The curling diameter of the tape piece E is smaller than that of the tape piece D.

The tape piece F has been obtained from the small roll F fabricated by applying 149.5 N/m of tensile force to the PET film 2. The curling diameter of the tape piece F is smaller than that of the tape piece E.

As apparent from the above results, curling diameter becomes smaller as tensile force to be applied to the PET film 2 at the moment of laminating the release sheet 4 onto the PET film 2 for fabricating an original scale tape is made larger.

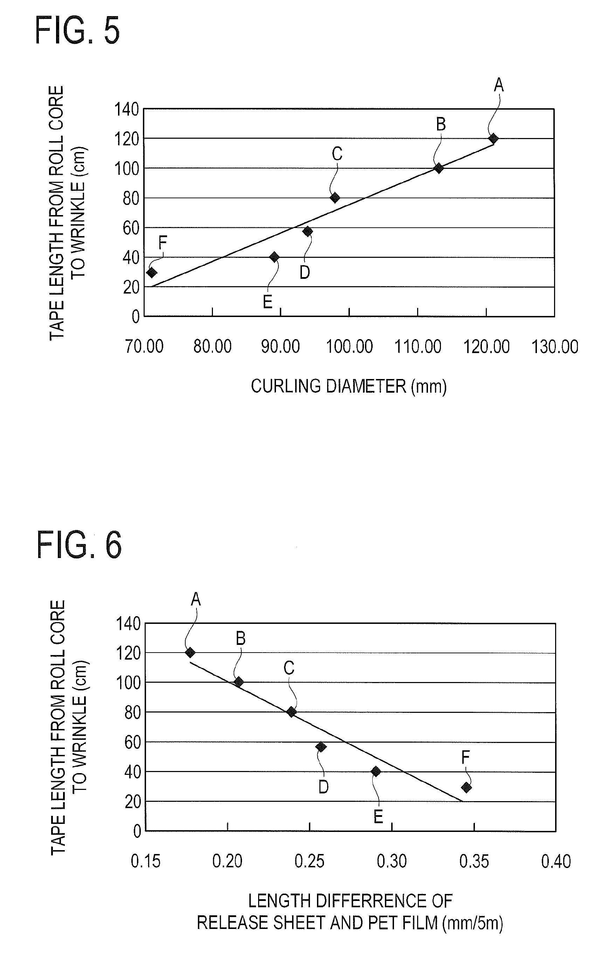

Photos of respective tape pieces A through F have been taken so as obtain clear curling-state images and image data of the respective tape pieces A through F have been taken into a personal computer so as to display there. By tracing an arc of each of the tape pieces A through F on the display, each of their outline has been clarified. It is to be noted that three trace samples have been created for each of the tape pieces A through F to obtain three of curling diameter values and calculate an average value of those three. Fig. 5 shows a graph of the measurement results.

Of the graph shown in Fig. 5, the abscissa indicates curling diameter value (mm) measured for the respective tape pieces A through F and the ordinate indicates tape length (cm) from a roll core to a portion that bears a wrinkle at outermost periphery of respective small rolls of double-sided adhesive tape 1.

In the graph of Fig. 5, the point A directed to the small roll A indicates that a wrinkle occurs at a location 118.4cm away from the roll core in the case of large curling diameter of 121.0mm. In this case a wrinkle occurs in the usable portion of the double-sided adhesive tape 1. Thereby, adhesive property deteriorates at the wrinkled usable portion and neatness is spoiled in a case where the double-sided adhesive tape 1 is used visibly and recognizably.

The point B directed to the small roll B indicates that a wrinkle occurs at a location 101.3cm away from the roll core in the case of curling diameter of 113.0mm. In this case, a winkle is supposed to occur at the boarder of the unusable portion and the usable portion of the double-sided adhesive tape 1. Even if the small roll B is used as double-sided adhesive tape 1, serious deficiency can hardly occur. However, it is not positively recommended to use the double-sided adhesive tape 1 with such deficiency.

The point C directed to the small roll C indicates that a wrinkle occurs at a location 79.9cm away from the roll core in the case of curling diameter of 98.0mm. In this case, a winkle is supposed to occur at the unusable portion only. Therefore, any deficiencies will not occur if the small roll C is used as double-sided adhesive tape 1.

The point D directed to the small roll D indicates that a wrinkle occurs at a location 57.4cm away from the roll core in the case of curling diameter of 94.0mm. In this case, a winkle is supposed to occur at the unusable portion only. Therefore, any deficiencies will not occur if the small roll D is used as double-sided adhesive tape 1.

The point E directed to the small roll E indicates that a wrinkle occurs at a location 39.4cm away from the roll core in the case of curling diameter of 89.0mm. In this case, a winkle is supposed to occur at the unusable portion only. Therefore, any deficiencies will not occur if the small roll E is used as double-sided adhesive tape 1.

The point F directed to the small roll F indicates that a wrinkle occurs at a location 29.4cm away from the roll core in the case of curling diameter of 71.0mm. In this case, a winkle is supposed to occur at the unusable portion only. Therefore, any deficiencies will not occur if the small roll F is used as double-sided adhesive tape 1.

To sum up, as long as curling diameter of the respective tape pieces A through F obtained under the above described condition is 113mm or smaller, for instance. 110mm or smaller, occurrence of a winkle can reliably be avoided in a usable portion of a small roll, the usable portion being away from the roll core of the small roll by 100cm or longer.

In a case where curling diameter is 50mm or larger, curvature of the double-sided adhesive tape 1 is held in favorable condition. Consequently, there arises little difference between circumferential length of the PET film 2 and that of the release sheet 4 presenting exterior to the PET film 2 and this can avoid the PET film 2 from bearing a wrinkle at a usable portion of the double-sided adhesive tape 1. On the other hand, in a case where curling diameter is 50mm or smaller, curvature of the double-sided adhesive tape 1 becomes too large and the PET film 2 is too much expanded. Consequently, at the time of using the double-sided adhesive tape 1 that has been kept in storage for long time, springback occurs to the PET film 2, which eventually causes slack of the release sheet 4 and separation of the release sheet 4 from the first adhesive layer 3 while the double-sided adhesive tape1 is being conveyed.

Next, it is considered that the PET film 2 of the double-sided adhesive tape 1 bears a wrinkle thereon due to circumferential difference between circumferential length of the release sheet 4 and that of the PET film 2. With this issue into consideration, there has been examined relation of the circumferential difference (mm) between circumferential length of the PET film 2 and that of the release sheet 4 and tape length (cm) from a roll core to a portion that bears a wrinkle with respect to each of small rolls A through F.

Here will be described on a method for measuring circumferential difference between circumferential length of the PET film 2 and that of the release sheet 4. For the measurement, the following steps have been taken: withdrawing a double-sided adhesive tape 1 from each of the small rolls A through F and cutting off by length longer than 5m; making two of cuts in each double-sided adhesive tape 1 at a 5m of interval therebetween: separating the PET film 2 and the release sheet 4 with respect to each double-sided adhesive tape 1; fixing one end of the PET film 2 and that of the release sheet 4 and hanging a 10g weight on the other end of the PET film 2 and that of the release sheet 4; and measuring length between two cuts of the PET film 2 and length between two cuts of the release sheet 4 so as to obtain length difference of those. It is to be noted that three of samples have been prepared for each of the small rolls A through F so as to obtain an average value of length difference. A graph in Fig. 6 shows the measurement result.

Of the graph shown in Fig. 6, the abscissa indicates length difference (mm/5m) of the PET film 2 and the release sheet 4 and the ordinate indicates tape length (cm) from a roll core to a portion that bears a wrinkle at outermost periphery of respective small rolls of double-sided adhesive tape 1.

In the graph of Fig. 6, the point A directed to the small roll A indicates that a wrinkle occurs at a location 118.4cm away from the roll core in the case of small length difference of 0.177mm, namely length difference between the 5m-long PET film 2 and the 5m-long release sheet 4. In this case a wrinkle occurs in the usable portion of the double-sided adhesive tape 1. Thereby, adhesive property deteriorates at the wrinkled usable portion and neatness is spoiled in a case where the double-sided adhesive tape 1 is used visibly and recognizably.

The point B directed to the small roll B indicates that a wrinkle occurs at a location 101.3cm away from the roll core in the case of 0.206mm difference between the 5m-long PET film 2 and the 5m-long release sheet 4. In this case, a winkle is supposed to occur at the boarder of the unusable portion and the usable portion of the double-sided adhesive tape 1. Even if the small roll B is used as double-sided adhesive tape 1, serious deficiency can hardly occur. However, it is not positively recommended to use the double-sided adhesive tape 1 with such deficiency.

The point C directed to the small roll C indicates that a wrinkle occurs at a location 79.9cm away from the roll core in the case of 0.240mm difference between the 5m-long the PET film 2 and the 5m-long release sheet 4. In this case, a winkle is supposed to occur at the unusable portion only. Therefore, any deficiencies will not occur if the small roll C is used as double-sided adhesive tape 1.

The point D directed to the small roll D indicates that a wrinkle occurs at a location 57.4cm away from the roll core in the case of 0.258 mm difference between 5m-long PET film 2 and the 5m-long release sheet 4. In this case, a winkle is supposed to occur at the unusable portion only. Therefore, any deficiencies will not occur if the small roll D is used as double-sided adhesive tape 1.

The point E directed to the small roll E indicates that a wrinkle occurs at a location 39.4cm away from the roll core in the case of 0.291mm difference between 5m-long of the PET film 2 and the 5m-long release sheet 4. In this case, a winkle is supposed to occur at the unusable portion only. Therefore, any deficiencies will not occur if the small roll E is used as double-sided adhesive tape 1.

The point F directed to the small roll F indicates that a wrinkle occurs at a location 29.4cm away from the roll core in the case of 0.346 mm difference between the 5m-long PET film 2 and the 5m-long release sheet 4. In this case, a winkle is supposed to occur at the unusable portion only. Therefore, any deficiencies will not occur if the small roll F is used as double-sided adhesive tape 1.

As mentioned above, when the length difference between the polyethylene terephthalate film 2 and the release sheet 4 of the double-sided adhesive tape 1 respectively derived from each of the small rolls A to F is 0.206 mm or larger, for example, 0.21 mm or larger, a wrinkle can be prevented from bearing in the usable portion exceeding 100 cm form the roll core in each of the small rolls A to F.

To sum up, in a case where length difference between the 5m-long PET film 2 and the 5m-long release sheet 4 is 0.35mm or smaller, their length difference is held in a favorable range. Consequently, there arises little difference between circumferential length of the PET film 2 and that of the release sheet 4 presenting exterior to the PET film 2 and this can avoid the PET film 2 from bearing a wrinkle at a usable portion of the double-sided adhesive tape 1. On the other hand, in a case where length difference between the 5m-long PET film 2 and the 5m-long release sheet 4 is larger than 0.35mm, the PET film 2 is too much expanded. Consequently, at the time of using the double-sided adhesive tape 1 that has been kept in storage for long time, springback occurs to the PET film 2, which eventually causes slack of the release sheet 4 and separation of the release sheet 4 from the first adhesive layer 3 while the double-sided adhesive tape 1 is being conveyed.

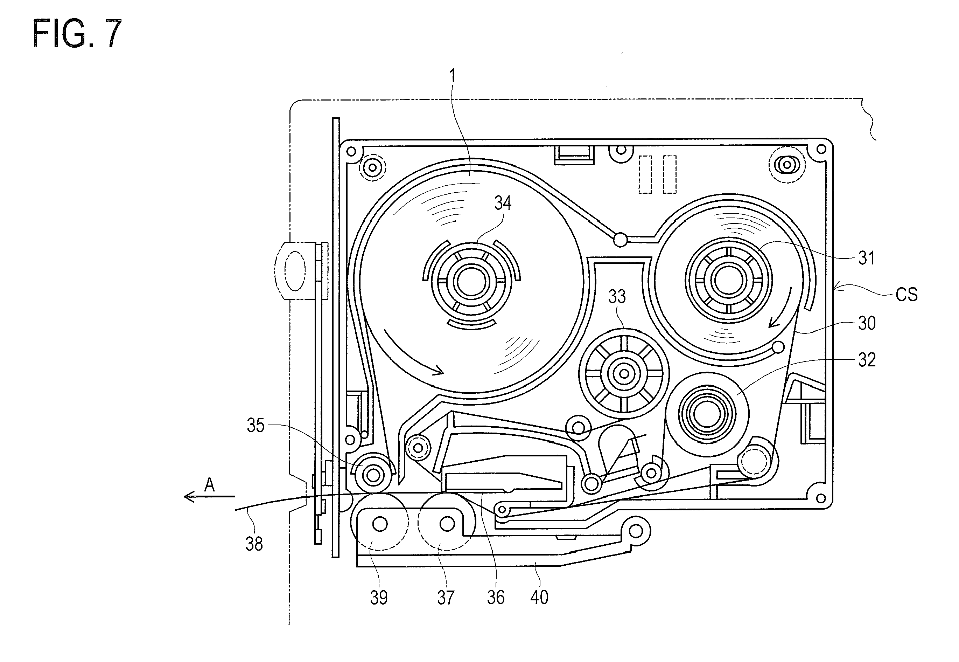

Each small roll of the thus configured double-sided adhesive tape 1 is used as tape to be accommodated in a tape cassette for a tape printing apparatus shown in Fig. 7.

Here will be described on a tape cassette employing a small of the double-sided adhesive tape 1 by referring to Fig. 7.

As shown in Fig. 7, a tape cassette CS is to be placed in a cassette insertion portion of a tape printing apparatus (not shown) in replaceable manner. The tape cassette CS is comprised of: a tape spool 31 onto which a transparent printing tape 30 is rolled; an ink ribbon 32 consisting of a base film and ink applied thereon, the ink being melt when heated; a take-up spool 33 taking-up the ink ribbon 32; a feed spool 34 onto which a double-sided adhesive tape 1 is rolled so as to make a release sheet turn outward, the double-sided adhesive tape 1 having the same width as the printing tape 30 (the spool corresponds to a roll core and the integration of the feed spool 34 and the double-side adhesive tape 1 rolled thereon corresponds to a small roll); and a bonding roller 35 that bonds the printing tape 30 and the double-sided adhesive tape 1 together for lamination. The tape spool 31, the feed spool 34 and the bonding roller 35 are rotatably arranged.

As already illustrated in Fig. 1, the double-sided adhesive tape 1 is comprised of: a polyethylene terephthalate (PET) film 2 as substrate film; a first adhesive layer 3 that is applied onto one surface of the PET film 2 (lower surface in Fig. 1); a release sheet 4 pasted onto the first adhesive layer 3; and a second adhesive layer 5 that is applied onto the other surface of the PET film 2 (upper surface in Fig. 1).

There is arranged upright a thermal head 36 that is mounted on the cassette insertion portion at the position where the printing tape 30 and the ink ribbon 32 meet each other. At the side of the tape printing apparatus, there are arranged a platen roller 37 for pressing the printing tape 30 and the ink ribbon 32 against the thermal head 36, and a conveying roller 39 for pressing the printing tape 30 and the double-sided adhesive tape 1 against the bonding roller 35 so as to create a printed tape 38. The platen roller 37 and the conveying roller 39 are rotatably supported by a supporting body 40 rotatably fixed to the tape printing apparatus. The thermal head 36 is comprised of heating element group, namely, 128 of heating elements (not shown) arranged in up-and-down direction (perpendicular to the tape surface).

In the above described configuration, the bonding roller 35 and the take-up spool 33 are rotated in a predetermined rotation direction along rotation of a tape feeding motor (not shown) in a predetermined direction. In synchronous with the rotation of those mechanical elements, the heating element group is electrically energized to heat the ink ribbon 32 with specific heating elements that have heated. Thereby, the ink applied onto the ink ribbon 32 is melted and characters, etc. are thermally transferred onto the printing tape 30. Further, the second adhesive layer 5 of the double-sided adhesive tape 1 is laminated onto the printing surface of the printing tape 30 by the bonding roller 35 and the conveying roller 39 and thus obtained printed tape 38 is conveyed along the tape conveying direction A.

While presently exemplary embodiments have been shown and described, it is to be understood that this disclosure is for the purpose of illustration and that various changes and modifications may be made without departing from the scope of the invention as set forth in the appended claims.

## Claims

1. A double-sided adhesive tape (1) rolled on a cylindrical roll core, the double-sided adhesive tape (1) comprising:
a polyethylene terephthalate film (2) having a first surface and a second surface opposite to the first surface;
a first adhesive layer (3) applied on the first surface of the polyethylene terephthalate film (2);
a release sheet (4) laminated on the first surface of the polyethylene terephthalate film (2) through the first adhesive layer (3), the release sheet (4) being laminated so as to turn exterior to the polyethylene terephthalate film (2); and
a second adhesive layer (5) applied on the second surface of the polyethylene terephthalate film (2),
wherein 100 N/m or larger of tensile force is applied to the polyethylene terephthalate film (2) when the release sheet (4) is laminated onto the first adhesive layer (3) applied on the first surface of the polyethylene terephthalate film (2).

2. The double-sided adhesive tape (1) according to claim 1, wherein tensile force applied to the polyethylene terephthalate film (2) is 200 N/m or smaller.

3. The double-sided adhesive tape (1) according to claim lor 2,
wherein a tape piece ((A ∼ F) obtained by unrolling and peeling off the double-sided adhesive tape (1) from the roll core and cutting off by 20 cm length is adjusted to have 110mm or smaller curling diameter measured after the tape piece (A ∼ F) has been kept for 24 hours under 50% humidity at 23 degrees Celsius.

4. The double-sided adhesive tape (1) according to claim 3, wherein curling diameter of the tape piece (A ∼ F) is adjusted to be 50mm or larger.

5. The double-sided adhesive tape (1) according to any one of claims 1 to 4,
wherein, in a case where a 10g of weight is hung for predetermined time on a first end of each of a 5m-long polyethylene terephthalate film (2) and a 5m-long release sheet (4) while a second end of each being fixed, and length change of each is measured after passage of the predetermined time, length change difference between the 5m-long polyethylene terephthalate film (2) and the 5m-long release sheet (4) is adjust to be 0.21 mm or larger, the 5m-long polyethylene terephthalate film (2) and the 5m-long release sheet (4) being obtained by unrolling the double-sided adhesive tape (1) from the roll core, cutting off by 5 m and separating the polyethylene terephthalate film (2) and the release sheet (4).

6. The double-sided adhesive tape (1) according to claim 5, wherein the length change difference between the 5m-long polyethylene terephthalate film (2) and the 5m-long release sheet (4) is made 0.35 mm or smaller.

7. The double-sided adhesive tape (1) according to any one of claims 1 to 6,
wherein the double-sided adhesive tape (1) is defined by an unusable portion accounting for one portion from the roll core to reach predetermined length of distance on the double-sided adhesive tape (1) and a usable portion accounting for other portion to exceed the predetermined length of distance from the roll core on the double-sided adhesive tape (1), and
wherein the polyethylene terephthalate film (2) is prevented from bearing a wrinkle in the usable portion.

8. A tape cassette (CS) comprising:
a tape spool (31) around which a transparent printing tape (30) is wound;
an ink ribbon (32) in which ink meltable by heating is coated on a base film;
a winding spool (33) for winding the ink ribbon (32);
and
a double-sided adhesive tape (1) having a same width of the printing tape (30);
wherein the double-sided adhesive tape (1) comprises:
a polyethylene terephthalate film (2) having a first surface and a second surface opposite to the first surface;
a first adhesive layer (3) applied on the first surface of the polyethylene terephthalate film (2);
a release sheet (4) laminated on the first surface of the polyethylene terephthalate film (2) through the first adhesive layer (3), the release sheet (4) being laminated so as to turn exterior to the polyethylene terephthalate film (2); and
a second adhesive layer (5) applied on the second surface of the polyethylene terephthalate film (2);
wherein 100 N/m or larger of tensile force is applied to the polyethylene terephthalate film (2) when the release sheet (4) is laminated onto the first adhesive layer (3) applied on the first surface of the polyethylene terephthalate film (2).

9. A producing method of a double-sided adhesive tape (1) comprising: a polyethylene terephthalate film (2) having a first surface and a second surface opposite to the first surface; a first adhesive layer (3) applied on the first surface of the polyethylene terephthalate film (2); a release sheet (4) laminated on the first surface of the polyethylene terephthalate film (2) through the first adhesive layer (3), the release sheet (4) being laminated so as to turn exterior to the polyethylene terephthalate film (2); and a second adhesive layer (5) applied on the second surface of the polyethylene terephthalate film (2), the producing method comprising:
applying step for applying 100 N/m or larger of tensile force to the polyethylene terephthalate film (2) before the release sheet (4) is laminated; and
laminating step for laminating the release sheet (4) onto the first adhesive layer (3) applied on the first surface of the polyethylene terephthalate film (2).
